# EUROPEAN PATENT SPECIFICATION

(11) **EP 1 474 914 B1**
(45) Date of publication and mention of the grant of the patent: **13.06.2007**
(21) Application number: 03701614.4
(22) Date of filing: 31.01.2003
(51) Int. Cl.: H04N 1/333

(54) **APPARATUS AND METHOD FOR SENDING IMAGE DATA**
EINRICHTUNG UND VERFAHREN ZUM VERSENDEN VON BILDDATEN
APPAREIL ET PROCEDE POUR ENVOYER DES DONNEES D'IMAGERIE

(30) Priority: 02.02.2002 GB 0202460
(43) Date of publication of application: 10.11.2004
(60) Divisional application: 06023427.5
(73) Proprietor: SUPERSCAPE GROUP PLC, Hook, Hampshire RG27 9XA (GB)
(72) Inventor: BEARDOW, Paul Rowland, Egham, Surrey TW20 9BE (GB)
(74) Representative: Ahmad, Sheikh Shakeel
(86) International application number: PCT/GB2003/000407
(87) International publication number: WO 2003/067870

(56) References cited:
- EP-A- 1 041 793
- US-A1- 2002 003 535
- PATENT ABSTRACTS OF JAPAN vol. 1999, no. 09, 30 July 1999 (1999-07-30) & JP 11 122398 A (SONY CORP), 30 April 1999 (1999-04-30)

## Description

The present invention relates to the transmission of image related material to a displaying device. The present invention, in particular, relates to the provision of an image to a mobile telephone device

US 2002/0003535 describes an image processor including a model destination controller for designating a model type of a portable terminal to which an image is to be displayed. The image processor also includes a screen format controller for determining at least one screen format among a plurality of screen formats of the designated model, a data capacity and data format of the image. The image processor further includes an image adjuster for adjusting the image, and a transmitter for transmitting the adjusted image to a server to which the portable terminal of a receiving party has access.

B. Hanni et al in "An active transcoding proxy to support mobile web access", at the IEEE Symposium on reliable distributed systems on 20-23 October 1998, describes active transcoding to support mobile web access.

According to one aspect of the present invention there is provided an apparatus for sending an image signal over a communications network to a receiving device having data-handling characteristics unknown to the apparatus, the apparatus comprising learning means for learning a current status of the data-handling characteristics of the receiving device, wherein the data-handling characteristics learned about the receiving device, include at least one of current receiver available memory capacity and current receiver processor availability; employing means for employing the learned data-handling characteristics to select a compatible version of the image signal compatible with the data-handling characteristics; creating means for creating the compatible version of the image signal; and sending means for sending the compatible version of the image signal to the receiving device via the communications network.

According to another aspect of the present invention there is provided a method of sending an image signal over a communications network from a sending apparatus to a receiving device having data-handling characteristics unknown to the sending apparatus, the method comprising: learning a current status of the data-handling characteristics of the receiving device, wherein the learning step comprises learning the current status of at least one of: current receiver available memory capacity and current receiver processor availability, of the receiving device; employing the learned data-handling characteristics to select a compatible version of the image signal compatible with the characteristics; creating the compatible version of the image signal; and sending the compatible version of the image signal to the receiving device via the communications network.

Preferably the learning means is further arranged to determine constant resource characteristics about the receiving device.

The communications network may comprise a shared communications network having time-variable bandwidth characteristic, and the Apparatus may further comprise determining means for determining the current bandwidth characteristic of the communications network connecting the apparatus and the receiving device, and wherein the employing means is arranged to employ the determined bandwidth characteristic in the selection of the compatible version of the image signal.

The constant resource characteristics, learned about the receiving device, can include one, some or all of: receiver display resolution; receiver display size; and receiver colour depth.

The communications network may comprise a shared communications network having time-variable bandwidth characteristic, and the apparatus may further comprise determining means for determining the current bandwidth characteristic of the communications network connecting the apparatus and the receiving device and adjusting means for adjusting an image characteristic of the selected compatible version of the image signal to account for the determined current bandwidth characteristic.

The adjusting means can be arranged to adjust at least one of depth of colour, resolution or frame rate of the selected compatible version of the image signal.

The apparatus can be arranged to send an image signal to a mobile telephone, a computer device or a television device.

The invention is further explained, by way of example, by the following description, taken in conjunction with the appended drawings, in which:
Figure 1 is a schematic diagram illustrating the environment within which the preferred embodiment of the present invention is practised.
Figure 2 is a flow chart showing, in general terms, how a transmitting device, operating according to the present invention, behaves.
Figure 3 is a flow chart showing one way in which a transmitting device would select an image to be transmitted.
   And
Figure 4 is a flow chart illustrating how a transmitting device tailors the selected transmission to match the receiving device and the available channel bandwidth.

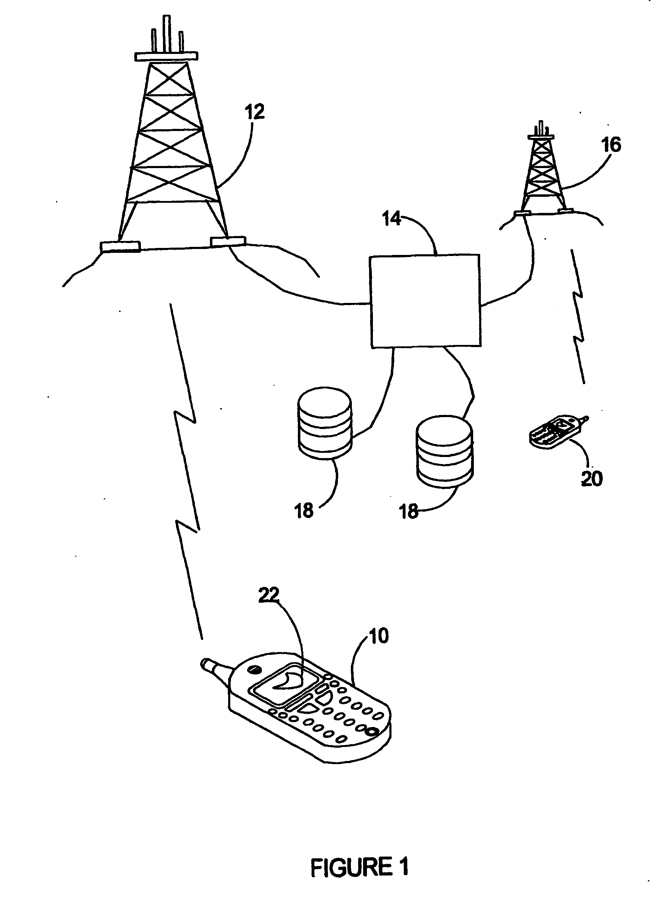

Attention is drawn to Figure 1, showing the general environment in which the preferred embodiment of the invention is practised.

A mobile telephone 10 is in radio communication with a mobile telephone network base station 12 which is, in turn, connected via the terrestrial telephone network 14 to other base stations 16 and one or more servers 18. The terrestrial telephone network 14 can comprise land lines, high band width cables, and microwave and satellite links. The terrestrial telephone network 14 allows connection to other mobile telephones 20, fixed telephones and fixed computer terminals. A mobile telephone 10 can access a server 18 for data, information and other resources. A server 18 can provide a mobile telephone 10 with images to display. The base stations 12 can be on any style or generation of mobile telephone system, provided it has the ability to display an image. The mobile telephone 10 comprises a screen 22 capable of displaying images.

The mobile telephone 10 is the preferred method of trans mission and reception in the chosen embodiment of the present invention. It is to be appreciated that the present invention encompasses any means for sending and receiving images and is not limited to mobile telephones 10, 20 or a mobile telephone network 12, 14, 16. The present invention equally allows personal digital assistants (PDA),televisions, computers and computer terminals to receive images through any other system including, for example, a wire or cable system or by satellite. The example of a mobile telephone is merely given as an apt application for the present invention.

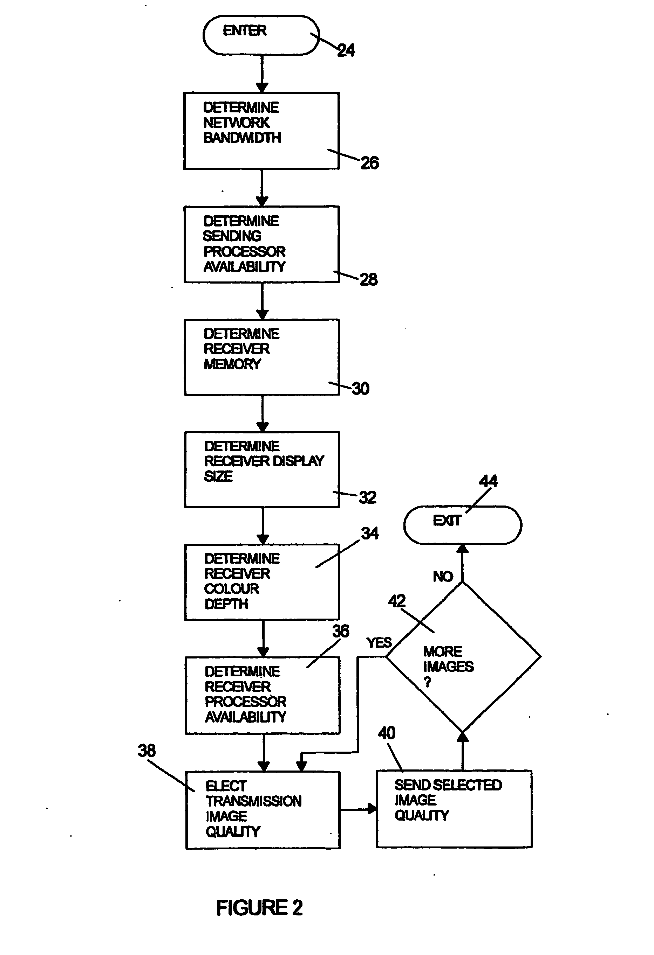

Attention is drawn to Figure 2, a flowchart showing the general activity of a transmitting device such as the server 18 of Figure 1, when functioning within the present invention.

As an example, the server 18 is charged with providing a frame of a moving image to a mobile telephone 10. The server 18 might, equally well, have been charged with sending a static image, a constructed scene, or any other pictorial representation. This example is merely chosen as being a more usual and demanding application for the system.

From an entry 24, a first operation 26 has the server 18 determine the network bandwidth. As earlier indicated, depending upon the number of subscribers on each base station, the network bandwidth may be larger or smaller. In general terms, the network bandwidth will be allocated as a reasonably high fixed figure, which is only reduced, on each base station, when the number of subscribers exceeds a predetermined limit on each base station. Different base stations can have different band widths. Equally, the present invention permits that not only the radio link from each base station, but also the land line connection to and from a base station, may also be subjected to bandwidth limitation when many subscribers are present. The bandwidth can be measured or, more usually, will arise as a result of the operating parameters of the system being set, and be a value of which the server 18 will simply be informed.

The first operation 26 having determined the bandwidth available for the server 18 to transmit its moving imageframe, a second operation 28 determines the sending processor availability. That is to say, if a frame of a moving image of particular size or complexity is to be sent, a certain, minimum amount of processor activity will be required at the server. Now, the server is simultaneously servicing many other base stations, and has, in addition, to perform many other tasks. It may be that the processor in the server 18 is not actually capable of handling that frame transmission activity given all of the other tasks which it is required to do. It is therefore essential to know, in advance, whether or not the processor in the server 18 is instantly capable of performing the task, and, if not, just what task it is capable of performing. The second operation 28 discovers what server processor resources can be allocated for the transmission task.

This done, a third operation 30 determines the receiving device memory. It may be that the mobile telephone 10 which, in this example, is acting as a receiving device, has a particularly large memory footprint. In this case, it will be capable of receiving complex and elaborate images. On the other hand, it is possible that the receiving mobile telephone 10 has only a very small memory footprint. In this case, the receiving mobile telephone 10 will be capable only of receiving a low resolution image. There is no point in sending a huge file to a small memory. The memory will simply be unable to hold the file. Equally, it would be a pity to lose the chance to display a truly detailed image by not sending a large file to a memory which is quite capable of containing that file. The size of the memory footprint in a receiving device can be determined not only by the amount of storage present, but can be reduced by memory usage for other tasks.

Once the receiving device memory availability is known, a fourth operation 32 determines the receiver display size. At one extreme, the receiving mobile telephone 10 might have a physically large screen with a high pixel density. On the other extreme, the receiving mobile telephone 10 might have a display of small size and of a coarse pixel density. There is no point in attempting to display an image of a high pixel density on a coarse resolution screen. The pixels have to match. Screens 22 can have different numbers of rows and columns of pixels. The transmitted frame has to be compatible with the pixels on the screen 22 of the receiving device 10.

Once the receiving device's screen details are known, a fifth operation 34 determines the receiving mobile telephone 10's depth of colour.

The display 22 may merely be black and white, in which case there will be, transmitted, for each pixel, a brightness number consisting of a predetermined number of binary digits (bits) which determine the grey scale. At the low resolution end, a four binary digit number allows for a grey scale with 16 levels of lightness. An eight binary digit number allows for a grey scale with 256 levels. Grey scales are known which use twelve, twenty-four, thirty six and even larger numbers of binary digits.

On the other hand, the display 22 may be a full colour display 22. In general, in colour displays, each pixel has a hue (the exact shade of its colour) and a saturation (the proportion of the coloured light which is not white). In current technology, it is general to approximate the hue and saturation of a pixel using different intensities of three colours. The pixel itself comprises three visible points which make up a full colour pixel, the three points being so close together that, at a viewing distance, they confuse the eye into a sense of unity.

In radiative displays, the colours are the radiative primary colours of red, blue and green. To make a near perfect range of hues and saturations for a pixel, it is simply necessary to mix together different proportions of these three lights. For example, no red, no green and no blue is equivalent to black. Full red, full green and full blue is full intensity white. Half red, half blue and half green is half intensity white (grey). Full red is one hundred percent saturated red. Full red, one third green and one third blue are fifty percent saturated red (pillar box red). All manner of hues and saturations are possible in between.

In representing the colour of a pixel, each of the red, green and blue lights is represented by a proportion of its full intensity. That proportion is represented by a number which is given by a string of binary digits. The more binary digits present in the string, the finer the resolution of the intensity of each light. In some, low resolution, systems, there may be only 16 levels of intensity for each primary colour. In the most sensitive current systems, it may take 42 binary digits (bits) to represent the intensity of each primary colour.

With the colour depth having been discovered, a sixth operation 36 determines the receiving mobile telephone's 10 processor availability. At one extreme, the data processor in the receiving mobile telephone 10 may be wide, fast and hardly used. At the other extreme, the processor in the receiving mobile telephone 10 may be narrow, slow and hard pressed. The state of the processor in the receiving mobile telephone 10 largely determines what it will be possible to ask the receiving mobile telephone 10 to do to an image signal before it is displayed.

Having determined all of these features of the receiving mobile telephone 10, of itself (the server 18) and of the network, the server 18, in a seventh operation 38, then elects the transmission image quality. That is to say, in a manner which is later explained in detail, a signal quality is determined which is close to the optimal signal quality which could be sent over the network, within the available bandwidth, to that particular receiving mobile telephone 10.

An eighth operation 40 then sends an image the selected image quality. The first test 42 terminates the operation in exit 44 if no further matter is to be sent, or passes control back to the seventh operation 38 if more images or frames are to be sent from the server 18 to the receiving mobile telephone 10.

The various circuit and receiver parameters determined in the first operation 26 to the sixth operation 36 can be determined by consulting a pre-loaded memory containing facts about particular types of mobile telephone 10, can be determined by actual measurements, or can be learned by receiving instructional updates from the base station 12 as the available bandwidth, for example, is racked up and down. In third generation systems, where connection is permanent, the mobile telephone network 14 would know, all of the time, the nature of the mobile telephone 10 which is connected to a particular subscriber slot.

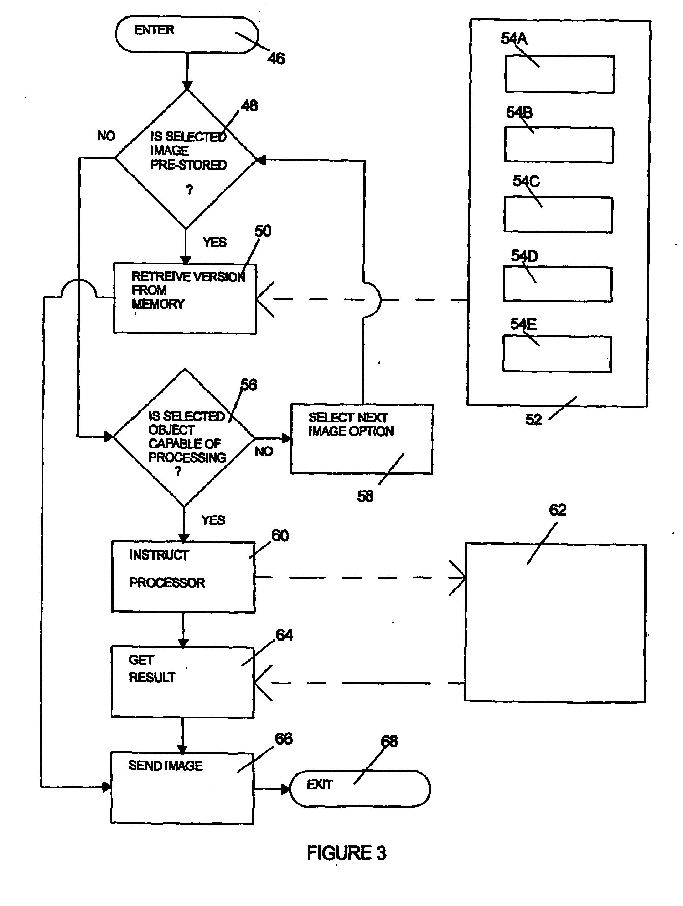

Attention is drawn to Figure 3, showing a flowchart, roughly corresponding to the seventh operation 38 of Figure 2, showing how the server 18 can select the image quality to be sent to the receiving mobile telephone 10.

From entry 46, a second test 48 looks to see if a copy of the frame of the selected image quality is pre-stored. If a frame of the selected image quality is pre-stored, a ninth operation 50 has the server 18 retrieve the required frame from an image store 52. The required image is selectable one from among a plurality of stored images of differing qualities 54A, 54B, 54C, 54D, 54E. Each of the stored image qualities, 54A - 54E has a differing quality from all of the others. One image 54B, for example, may have a smaller number of pixels. Another, 54C, may have a lesser depth of colour (number of bits defining hue and saturation). All of the stored images 54A - 54E represent a different image frame, each suitable for a particular style of receiving mobile telephone 10.

If the second test 48 does not detect that the selected image is pre-stored, a third test 56 checks to see if the selected image is capable of being derived by image processing. If it is not, a tenth operation 58 selects another image option and returns control to the second test 48.

If the third test 56 determines that the selected image is capable of being generated by processing, an eleventh operation 60 provides the on-board processor 62 with all of the instructions necessary to generate a signal of the required image quality. Thereafter, the eleventh operation 60 passes control to a twelfth operation 64 which receives the results back from the processor 62. A thirteenth operation 66 then sends the image to the receiving mobile telephone 10 and terminates in exit 68. The ninth operation 50 also transfers control to the thirteenth operation 66.

The activities of the processor 62 under instruction from the eleventh operation 60 can be many and varied. For example, if a receiving microprocessor 10 does not have a particularly large depth of colour, the processor 62 can be instructed to reduce the number of binary digits used to define the colour of a pixel in the displayed image. If the display 22 on the receiving mobile telephone 10 is of a particularly low resolution, the processor 62 can be instructed to send only every other pixel, or to merge pixels to reduce the number by half. Other numbers are also possible.

These examples are given only by way of example and are not intended to constitute a limitation.

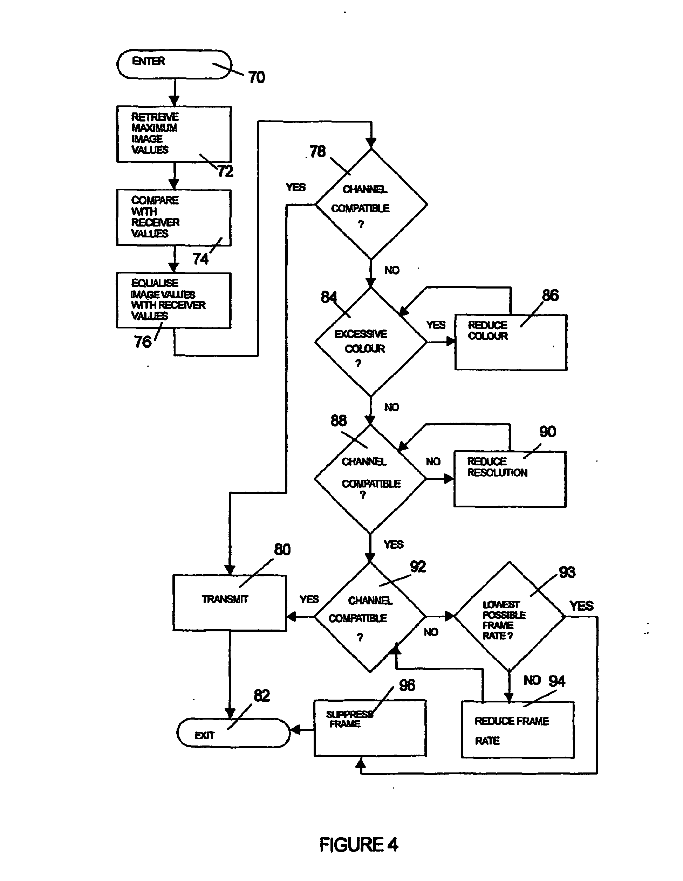

Attention is drawn to Figure 4, showing a flowchart illustrating how, having accommodated a particular network and receiving radio telephone 10, a transmitting server, according to the present invention, is capable, automatically, to adapt to varying bandwidth and other conditions found on the network.

From entry 70, a fourteenth operation 72 elicits the maximum values for each of the parameters of the frame of the moving image. That is to say, the server 18 learns, for example, the maximum number of horizontal pixels, the maximum number of vertical pixels, the maximum number of bits defining the colour of a pixel, the maximum frame rate, etc. In other words, the fourteenth operation 72 calls forth the parameters which would define highest possible quality resolution of the image. The fifteenth operation 74 then compares the maximum parameter values which can be attained by the image with the material available to the server 18 with the values of the image parameters possessed by the receiver. The fifteenth operation 74 thus calls forth the best resolution which can be obtained on the receiving mobile telephone 10. A sixteenth operation 76 then equalises the values of the image parameters of the fourteenth operation 72 with the values of the receiver parameters of the fifteenth operation 74. This obtains, or gets at least a close approximation to, the selected image quality of the operation shown in Figure 3. All things being equal, the result at the end of the sixteenth operation 76 would be the sent image from the thirteenth operation 66 of Figure 3. However, it is essential to take account of the variable bandwidth available.

A fourth test 78 checks to see if the resulting signal is compatible with the channel down which it is to be sent. If it is, that is to say, the channel does not have restricted bandwidth, or a lesser bandwidth that would normally be capable of being handled by the receiving mobile telephone 10, a seventeenth operation 80 transmits the frame and terminates the operation through exit 82. If, however, the fourth test 78 detects that the signal it is proposed to transmit is not compatible with the instantaneous condition of the channel, a fifth test 84 looks to see if the proposed signal carries an excessive amount of colour. The human eye is sensitive to gross changes of hue, but is quite insensitive to quite gross changes in saturation, of a colour. Accordingly, if the fifth test 84 detects, say, that the signal proposes to use a large number of pigment-defining data bits (for example, 42 or 24) when a perfectly reasonable result would be obtained with a lesser number of pigment-defining binary digits, for example, 12, an eighteenth operation 86 reduces the number of colour-defining binary digits and returns control back to the fifth test 84. If the colour is still excessive and the signal is still not compatible with the channel, further reduction of the number of colour-defining binary digits is undertaken until either the colour is no longer excessive and the signal is compatible with the channel, or the colour is no longer excessive but the signal is still not compatible with the width of the channel.

Control then passes to a sixth test 88 where the proposed transmitted signal is, once again, examined to see if it is consistent with the bandwidth and other restrictions on the channel.

If it is still not narrow enough to pass through the channel in its present condition, another quality is chosen by which the actual quality of the signal can be reduced with minimal impact on the perceived quality. In this example, for the next stage, it is elected to reduce the resolution of the picture displayed on the screen 22.

The human eye's awareness of resolution of a screen image varies widely. Very young children have acute but unaware resolution. As age progresses, up to the mid or late twenties, vision is both acute and practised. Beyond the thirties, vision becomes less acute. Ocular acuteness is measured, in the individual, as the minimum solid angle which can be individually resolved. From the screen's 22 point of view, display acuteness the size of the smallest item which can be individually perceived by a viewer at the minimum viewing distance. There is a lot of leeway in the viewing parameters for the screen 22. The screen 22 is seldom viewed from as short a distance as the minimum viewing distance. The minimum viewing distance is generally set for a shortest focal distance which is less than half of the mean shortest focal distance for the population. All this means that, all things being equal, it would probably be possible to reduce the acuteness of the image by a factor of at least four or eight before half of the population noticed any degradation whatsoever.

Therefore, a nineteenth operation 90 reduces the acuteness of the resolution of the frame of the pixel density of the moving image to be sent. It does this, for one example, by electing to omit every Nth pixel element in the vertical and horizontal direction. The mapping is then redistributed over the original number of pixels. In N=5, a 20% linear loss of actual resolution is achieved. Simpler regimes, for another example, can be achieved by transmitting only every Mth pixel in a vertical, a horizontal, or both directions. Where a pixel was omitted, the previously transmitted pixel is simply substituted. With this example, quite dramatic band width reductions can be achieved for little loss of actually perceived image detail. The invention can include any means whereby the acuteness of the displayed image can be reduced.

At each stage of reduction of resolution, the nineteenth operation 90 returns control to the sixth test 88. Control only passes to a seventh test 92 whenever either the signal, which it is proposed to transmit, is compatible with the channel or the signal is not compatible with the channel but has reached a lower limit of pixel density (displayed acuteness) beyond which it is not advisable to go.

Control then passes to a seventh test 92 which, yet again, looks to see if the proposed signal for transmission is compatible with the bandwidth and other restrictions on the channel. If it is not, as a final measure, in this example, a twentieth operation 94 elects to reduce the frame repetition rate. This can only be taken so far. The human eye is sensitive to flicker, in general, for images presented below ten or twelve per second. Certain individuals can detect flicker at image presentation rates up to 25 per second. Very few human individuals detect flicker at presentation rates above this. Reduction in frame repetition rate can be made towards the rates indicated. At each pass, a low frame rate test 93 checks to see if the frame rate has reached a lower boundary below which it is not allowed to fall.

If even this measure fails, a twenty-first operation 96 suppresses the transmission of that frame.

If, however, this measure is successful, the seventh test 92 passes control to the seventeenth operation 80 which transmits the frame.

While the action of Figure 4 has been described in terms of testing signals to see if they fit through a band width of the channel, it is to be appreciated that the same result, within the invention, can be achieved by simply calculating what changes need to be made to the ideal signal and applying those changes prior to transmission. The explanation of Figure 4 is given in the manner that it is in order to facilitate understanding.

The various measures, taken to reduce the bandwidth of the signal, while shown as being applied in separate epochs in this example, can be applied together. For example, the colour can be reduced, together with a little loss of resolution, and a little further loss of colour, and some, all or none of each possible type of bandwidth reduction measure, applied in turn, until a signal, sufficiently low in bandwidth to be transmissible via the channel, is obtained. Once again, the same result can be achieved, within the invention, by means of calculation.

To summarise, clarify and re-iterate what has been described with reference to Figure 4: the action of Figure 4 is to create an image consistent with the best quality that the receiving mobile telephone 10 is capable of receiving or of the best quality that the channel, unrestricted, can carry. This is the "ideal" frame or image. In a perfect world, this is the frame or image which would be sent and received.

However, the bandwidth available to transmit the frame or image is not necessarily wide enough to transmit the ideal frame or image. Up to a certain number of subscribers on a base station, there may be no problem, each subscriber being allocated a fixed, adequate amount. Beyond a certain number of subscribers on a base station, the bandwidth allocated to each subscriber can be reduced.

Thus, in order to accommodate the reduction in bandwidth which the agglomeration of subscribers on a base station may engender, various qualities of the image are reduced until an image signal is provided capable of being carried (or not) within the bandwidth. In this instance, purely by way of example, and non-exclusively, the depth of colour, followed by the displayed pixel density and, finally, the frame rate, are all reduced until a signal is obtained which fits within the bandwidth allocated to a particular receiving mobile telephone 10. These measures are chosen purely by way of non exclusive and non exhaustive example. Those skilled in the art will be aware of other measures which can be applied. All that is required, from the point of view of the present invention, is that a measure can be applied which reduces the bandwidth of the signal to be transmitted without rendering the quality of the displayed signal unacceptable. Other, non limiting, examples include reduction of a colour image to a grey or black and white image, and freezing the displayed image for that frame and subsequent frames.

While the invention has been described with reference to transmission of a single frame, or a group of frames, in a broadcast of an animated image in a mobile telephone network from a server 18 to a receiving mobile telephone 10, it is to be appreciated that the present invention is also applicable to transmission of any kind of image or data The adopted measures may be set up frame by frame, or block by block, or may be set up and maintained for a predetermined time to allow for changes in base station bandwidth as with varying subscriber numbers, or may be set up and maintained for a session. The measures can be triggered to change as the bandwidth of the system alters. Certain subscribers or mobile telephone 10 types can have a higher category of access, whereby they enjoy no cutoff and/or higher bandwidth while lower category subscribers risk having their signal frozen or cut off as bandwidth reduces.

## Claims

1. An apparatus (18) for sending an image signal over a communications network (14) to a receiving device (10) having data-handling characteristics unknown to the apparatus, the apparatus comprising:
learning means for learning (30, 36) a current status of the data-handling characteristics of the receiving device
wherein the data-handling characteristics learned about the receiving device (10), include at least one of current receiver available memory capacity and current receiver processor availability;
employing means for employing the learned data-handling characteristics to select (38) a compatible version (54A-E) of the image signal compatible with the data-handling characteristics;
creating means for creating the compatible version (54A-E) of the image signal; and
sending means for sending (40) the compatible version (54A-E) of the image signal to the receiving device (10) via the communications network (14).

2. An apparatus according to Claim 1, wherein the learning means is further arranged to determine (32,34) constant resource characteristics about the receiving device (10).

3. An apparatus according to Claim 2, wherein the constant resource characteristics learned about the receiving device (10), include at least one of receiver display size; receiver colour depth; and receiver display resolution.

4. An apparatus according to any preceding claim, wherein the communications network (14) is a shared communications network having time-variable bandwidth characteristic, and the apparatus (18) further comprises:
sending capacity determining means for determining (28) the current sending capacity characteristic of the apparatus (18); and wherein
the employing means is arranged to employ the determined sending capacity characteristic in the selection of the compatible version of the image signal.

5. An apparatus according to any preceding claim, wherein the communications network is a shared communications network having time-variable bandwidth characteristic, and the apparatus further comprises:
determining means for determining the current bandwidth characteristic of the communications network connecting the apparatus and the receiving device; and wherein
the employing means is arranged to employ the determined bandwidth characteristic in the selection of the compatible version of the image signal.

6. An apparatus according to any of Claims 1 to 4, wherein the communications network is a shared communications network having time-variable bandwidth characteristic, and the apparatus further comprises:
determining means for determining the current bandwidth characteristic of the communications network connecting the apparatus and the receiving device; and
adjusting means for adjusting an image characteristic of the selected compatible version of the image signal to account for the determined current bandwidth characteristic.

7. An apparatus according to Claim 6, wherein the adjusting means is arranged to adjust at least one of: depth of colour; resolution; and frame rate of the selected compatible, version of the image signal.

8. An apparatus according to Claim 6 or 7, wherein the determining means is arranged to receive instructional updates from the shared communications network regarding the available bandwidth for a connection from the apparatus to the receiving device.

9. An apparatus according to any preceding claim, wherein the apparatus comprises a mobile telecommunications server arranged to operate with a mobile telecommunications network to send an image signal to a mobile telecommunications device.

10. An apparatus according to any of claims 1 to 8, wherein the apparatus is arranged to send an image signal to a computer device or a television device.

11. A method of sending an image signal over a communications network from a sending apparatus to a receiving device having data-handling characteristics unknown to the sending apparatus, the method comprising:
learning a current status of the data-handling characteristics of the receiving device,
wherein the learning step comprises learning the current status of at least one of: current receiver available memory capacity and current receiver processor availability, of the receiving device;
employing the learned data-handling characteristics to select a compatible version of the image signal compatible with the characteristics;
creating the compatible version of the image signal; and
sending the compatible version of the image signal to the receiving device via the communications network.

12. A method according to Claim 11, wherein the learning step includes further determining constant resource characteristics about the receiving device.

13. A method according to Claim 12, wherein the constant resource characteristics learned about the receiving device, include at least one of receiver display size, receiver colour depth, and receiver display resolution.

14. A method according to any one of Claims 11 to 13, wherein the communications network is a shared communications network having time-variable bandwidth characteristic, and the method further comprises:
determining the current sending capacity characteristic of the apparatus; and wherein
the employing step includes employing the determined sending capacity characteristic in the selection of the compatible version of the image signal.

15. A method according to any of Claims 11 to 14, wherein the communications network is a shared communications network having time-variable bandwidth characteristic, and the method further comprises:
determining the current bandwidth characteristic of the communications network connecting the apparatus and the receiving device; and wherein
the employing step includes employing the determined bandwidth characteristic in selecting the compatible version of the image signal.

16. A method according to any of Claims 11 to 14, wherein the communications network is a shared communications network having time-variable bandwidth characteristic, and the method further comprises:
determining the current bandwidth characteristic of the communications network connecting the apparatus and the receiving device; and
adjusting an image characteristic of the selected compatible version of the image signal to account for the determined current bandwidth characteristic.

17. A method according to Claim 16, wherein the adjusting step comprises adjusting at least one of: depth of colour; resolution; and frame rate of the selected compatible version of the image signal.

18. A method according to Claim 16 or 17, wherein the determining step comprises receiving instructional updates from the shared communications network regarding the available bandwidth for a connection from the apparatus to the receiving device.

19. A method according to any of claims 11 to 18, wherein the sending step comprises sending the selected version of the image signal from a mobile telecommunications server via a mobile telecommunications network to a mobile telecommunications device

20. A method according to any of claims 11 to 18 wherein the sending step comprises sending the selected version of the image signal to a computer device or a television device.

## Patentansprüche

1. Einrichtung (18) zum Senden eines Bildsignals über ein Kommunikationsnetzwerk (14) an ein Empfangsgerät (10) mit der Einrichtung unbekannten Datenhandhabungs-Eigenschaften, wobei die Einrichtung umfasst:
- Lernmittel zum Lernen (30, 36) des aktuellen Status der Datenhandhabungseigenschaften des Empfangsgeräts, wobei die über das Empfangsgerät (10) gelernten Datenhandhabungseigenschaften die aktuelle dem Empfänger zur Verfügung stehende Speicherkapazität und/oder die aktuelle Empfänger-Prozessorverfügbarkeit umfassen,
- Anwendungsmittel zum Anwenden der gelernten Datenhandhabungseigenschaften, um eine kompatible Version (54A-E) des Bildsignals auszuwählen (38), die oder der mit den Datenhandhabungs-Eigenschaften kompatibel ist,
- Erzeugungsmittel zum Erzeugen der kompatiblen Version (54A-E) des Bildsignals, und
- Sendemittel zum Senden (40) der kompatiblen Version (54A-E) des Bildsignals an das Empfangsgerät (10) über das Kommunikationsnetzwerk (14).

2. Einrichtung nach Anspruch 1,
wobei das Lernmittel ferner dafür ausgelegt ist, konstante Ressourceneigenschaften des Empfangsgeräts (10) zu bestimmen (32, 34).

3. Einrichtung nach Anspruch 2,
wobei die über das Empfangsgerät (10) gelernten konstanten Ressourceneigenschaften die Empfänger-Displaygröße, Empfänger-Farbtiefe und/oder Empfänger-Displayauflösung umfassen.

4. Einrichtung nach einem der vorhergehend Ansprüche,
wobei das Kommunikationsnetzwerk (14) ein Shared-Communications-Netzwerk mit zeitvariablen Bandbreiteneigenschaften ist und die Einrichtung (18) ferner umfasst:
- Sendekapazitätsbestimmungsmittel zum Bestimmen (28) der aktuellen Sendekapazitätseigenschaft der Einrichtung (18), und wobei
- das Anwendungsmittel dafür ausgelegt ist, die bestimmte Sendekapazitätseigenschaft bei der Auswahl der kompatiblen Version des Bildsignals anzuwenden.

5. Einrichtung nach einem der vorhergehenden Ansprüche,
wobei das Kommunikationsnetzwerk ein Shared-Communications-Netzwerk mit zeitvariablen Bandbreiteneigenschaften ist und die Einrichtung ferner umfasst:
- Bestimmungsmittel zum Bestimmen der aktuellen Bandbreiteneigenschaft des Kommunikationsnetzwerks, das die Einrichtung und das Empfangsgerät miteinander verbindet, und wobei
- das Anwendungsmittel dafür ausgelegt ist, die bestimmte Bandbreiteneigenschaft bei der Auswahl der kompatiblen Version des Bildsignals anzuwenden.

6. Einrichtung nach einem der Ansprüche 1 bis 4,
wobei das Kommunikationsnetzwerk ein Shared-Communications-Netzwerk mit zeitvariablen Bandbreiteneigenschaften ist und die Einrichtung ferner umfasst:
- Bestimmungsmittel zum Bestimmen der aktuellen Bandbreiteneigenschaft des Kommunikationsnetzwerks, das die Einrichtung und das Empfangsgerät miteinander verbindet, und
- Einstellmittel zum Einstellen einer Bildeigenschaft der gewählten kompatiblen Version des Bildsignals, um die bestimmte aktuelle Bandbreiteneigenschaft zu berücksichtigen.

7. Einrichtung nach Anspruch 6,
wobei das Einstellmittel dafür ausgelegt ist, die Farbtiefe, Auflösung und/oder Frame-Rate der gewählten kompatiblen Version des Bildsignals einzustellen.

8. Einrichtung nach Anspruch 6 oder 7,
wobei das Bestimmungsmittel dafür ausgelegt ist, Befehlsaktualisierungen vom Shared-Communications-Netzwerk im Hinblick auf die verfügbare Bandbreite für eine Verbindung von der Einrichtung zum Empfangsgerät zu empfangen.

9. Einrichtung nach einem der vorhergehenden Ansprüche,
wobei die Einrichtung einen Mobil-Telekommunikationsserver umfasst, der dafür ausgelegt ist, mit einem Mobil-Telekommunikationsnetzwerk zu arbeiten, um ein Bildsignal an ein Mobil-Telekommunikationsgerät zu senden.

10. Einrichtung nach einem der Ansprüche 1 bis 8,
wobei die Einrichtung dafür ausgelegt ist, ein Bildsignal an ein Computergerät oder ein Fernsehgerät zu senden.

11. Verfahren zum Senden eines Bildsignals über ein Kommunikationsnetzwerk von einer Sendeeinrichtung an ein Empfangsgerät mit der Sendeeinrichtung unbekannten Datenhandhabungseigenschaften, wobei das Verfahren umfasst:
- Lernen des aktuellen Status der Datenhandhabungseigenschaften des Empfangsgeräts, wobei der Lernschritt das Lernen des aktuellen Status der aktuellen dem Empfänger zur Verfügung stehenden Speicherkapazität und/oder der aktuellen Empfänger-Prozessorverfügbarkeit des Empfangsgeräts umfasst,
- Anwenden der gelernten Datenhandhabungseigenschaften, um eine kompatible Version des Bildsignals auszuwählen, die mit den Eigenschaften kompatibel ist,
- Erzeugen der kompatiblen Version des Bildsignals, und
- Senden der kompatiblen Version des Bildsignals an das Empfangsgerät über das Kommunikationsnetzwerk.

12. Verfahren nach Anspruch 11,
wobei der Lernschritt ferner das Bestimmen konstanter Ressourceneigenschaften des Empfangsgeräts umfasst.

13. Verfahren nach Anspruch 12,
wobei die über das Empfangsgerät gelernten konstanten Ressourceneigenschaften die Empfänger-Displaygröße, Empfänger-Farbtiefe und/oder Empfänger-Displayauflösung umfassen.

14. Verfahren nach einem der Ansprüche 11 bis 13,
wobei das Kommunikationsnetzwerk ein Shared-Communications-Netzwerk mit zeitvariablen Bandbreiteneigenschaften ist und das Verfahren ferner umfasst:
- Bestimmen der aktuellen Sendekapazitätseigenschaft der Einrichtung, und wobei
- der Anwendungsschritt das Anwenden der bestimmten Sendekapazitätseigenschaft bei der Auswahl der kompatiblen Version des Bildsignals umfasst.

15. Verfahren nach einem der Ansprüche 11 bis 14,
wobei das Kommunikationsnetzwerk ein Shared-Communications-Netzwerk mit zeitvariablen Bandbreiteneigenschaften ist und das Verfahren ferner umfasst:
- Bestimmen der aktuellen Bandbreiteneigenschaft des Kommunikationsnetzwerks, das die Einrichtung und das Empfangsgerät miteinander verbindet, und wobei
- der Anwendungsschritt das Anwenden der bestimmten Bandbreiteneigenschaft bei der Auswahl der kompatiblen Version des Bildsignals umfasst.

16. Verfahren nach einem der Ansprüche 11 bis 14,
wobei das Kommunikationsnetzwerk ein Shared-Communications-Netzwerk mit zeitvariablen Bandbreiteneigenschaften ist und das Verfahren ferner umfasst:
- Bestimmen der aktuellen Bandbreiteneigenschaft des Kommunikationsnetzwerks, das die Einrichtung und das Empfangsgerät miteinander verbindet, und
- Einstellen einer Bildeigenschaft der gewählten kompatiblen Version des Bildsignals, um die bestimmte aktuelle Bandbreiteneigenschaft zu berücksichtigen.

17. Verfahren nach Anspruch 16,
wobei der Einstellschritt das Einstellen der Farbtiefe, Auflösung und/oder Frame-Rate der gewählten kompatiblen Version des Bildsignals umfasst.

18. Verfahren nach Anspruch 16 oder 17,
wobei der Bestimmungsschritt das Empfangen von Befehlsaktualisierungen vom Shared-Communications-Netzwerk im Hinblick auf die verfügbare Bandbreite für eine Verbindung von der Einrichtung zum Empfangsgerät umfasst.

19. Verfahren nach einem der Ansprüche 11 bis 18,
wobei der Sendeschritt das Senden der gewählten Version des Bildsignals von einem Mobil-Telekommunikationsserver über ein Mobil-Telekommunikationsnetzwerk an ein Mobil-Telekommunikationsgerät umfasst.

20. Verfahren nach einem der Ansprüche 11 bis 18,
wobei der Sendeschritt das Senden der gewählten Version des Bildsignals an ein Computergerät oder ein Fernsehgerät umfasst.

## Revendications

1. Appareil (18) pour envoyer un signal d'image sur un réseau de communication (14) à un dispositif de réception (10) ayant des caractéristiques de gestion de données inconnues de l'appareil, l'appareil comprenant :
des moyens d'apprentissage pour apprendre (30, 36) un état actuel des caractéristiques de gestion de données du dispositif de réception, dans lequel les caractéristiques de gestion de données apprises concernant le dispositif de réception (10) comprennent au moins l'une d'une capacité actuelle de mémoire disponible de récepteur et d'une disponibilité actuelle de processeur de récepteur ;
des moyens d'utilisation pour utiliser les caractéristiques de gestion de données apprises pour sélectionner (38) une version compatible (54A-E) du signal d'image compatible avec les caractéristiques de gestion de données ;
des moyens de création pour créer la version compatible (54A-E) du signal d'image ; et
des moyens d'envoi pour envoyer (40) la version compatible (54A-E) du signal d'image au dispositif de réception (10) via le réseau de communication (14).

2. Appareil selon la revendication 1, dans lequel les moyens d'apprentissage sont en outre agencés pour déterminer (32, 34) des caractéristiques de ressources constantes concernant le dispositif de réception (10).

3. Appareil selon, la revendication 2, dans lequel les caractéristiques de ressources constantes apprises concernant le dispositif de réception (10) comprennent au moins l'une d'une taille d'afficheur du récepteur ; d'une intensité des couleurs du récepteur ; et d'une résolution d'afficheur du récepteur.

4. Appareil selon l'une quelconque des revendications précédentes, dans lequel le réseau de communication (14) est un réseau de communication partagé ayant une caractéristique de bande passante variable dans le temps, et l'appareil (18) comprend en outre :
des moyens de détermination de capacité d'envoi pour déterminer (28) la caractéristique de capacité d'envoi actuelle de l'appareil (18) ; et dans lequel
les moyens d'utilisation sont agencés pour utiliser la caractéristique de capacité d'envoi déterminée pour la sélection de la version compatible du signal d'image.

5. Appareil selon l'une quelconque des revendications précédentes, dans lequel le réseau de communication est un réseau dé communication partagé ayant une caractéristique de bande passante variable dans le temps, et l'appareil comprend en outre :
des moyens de détermination pour déterminer la caractéristique de bande passante actuelle du réseau de communication connectant l'appareil et le dispositif de réception ; et dans lequel
les moyens d'utilisation sont agencés pour utiliser la caractéristique de bande passante déterminée pour la sélection de la version compatible du signal d'image.

6. Appareil selon l'une quelconque des revendications 1 à 4, dans lequel le réseau de communication est un réseau de communication partagée ayant une caractéristique de bande passante variable dans le temps, et l'appareil comprend en outre :
des moyens de détermination pour déterminer la caractéristique de bande passante actuelle du réseau de communication connectant l'appareil et le dispositif de réception ; et
des moyens d'ajustement pour ajuster une caractéristique d'image de la version compatible sélectionnée du signal d'image pour qu'elle corresponde à la caractéristique de bande passante actuelle déterminée.

7. Appareil selon la revendication 6, dans lequel les moyens d'ajustement sont agencés pour ajuster au moins l'une d'une intensité des couleurs ; d'une résolution ; et d'une fréquence de trames de la version compatible sélectionnée du signal d'image.

8. Appareil selon la revendication 6 ou 7, dans lequel les moyens de détermination sont agencés pour recevoir des mises à jour d'instruction du réseau de communication partagé concernant la bande passante disponible pour une connexion de l'appareil vers le dispositif de réception.

9. Appareil selon l'une quelconque des revendications précédentes, dans lequel l'appareil comprend un serveur de télécommunication mobile agencé pour fonctionner avec un réseau de télécommunication mobile pour envoyer un signal d'image à un dispositif de télécommunication mobile.

10. Appareil selon l'une quelconque des revendications 1 à 8, dans lequel l'appareil est agencé, pour envoyer un signal d'image à un dispositif informatique ou un dispositif de télévision.

11. Procédé d'envoi d'un signal d'image sur un réseau de communication d'un appareil d'envoi à un dispositif de réception ayant des caractéristiques de gestion de données inconnues de l'appareil d'envoi, le procédé comprenant les étapes consistant à :
apprendre un état actuel des caractéristiques de gestion de données du dispositif de réception, dans lequel l'étape d'apprentissage comprend l'apprentissage de l'état actuel d'au moins l'une d'une capacité actuelle de mémoire disponible de récepteur et d'une disponibilité actuelle de processeur de récepteur, du dispositif de réception ;
utiliser les caractéristiques de gestion de données apprises pour sélectionner une version compatible du signal d'image compatible avec les caractéristiques ;
créer la version compatible du signal d'image ; et
envoyer la version compatible du signal d'image au dispositif de réception via le réseau de communication.

12. Procédé selon la revendication 11, dans lequel l'étape d'apprentissage comprend en outre la détermination de caractéristiques de ressources constantes concernant le dispositif de réception.

13. Procédé selon la revendication 12, dans lequel les caractéristiques de ressources constantes apprises concernant le dispositif de réception comprennent au moins l'une d'une taille d'afficheur du récepteur, d'une intensité des couleurs du récepteur et d'une résolution d'afficheur du récepteur.

14. Procédé selon l'une quelconque des revendications 11 à 13, dans lequel le réseau de communication est un réseau de communication partagé ayant une caractéristique de bande passante variable dans le temps, et le procédé comprend en outre l'étape consistant à :
déterminer la caractéristique de capacité d'envoi actuelle de l'appareil ; et dans lequel
l'étape d'utilisation comprend l'utilisation de la caractéristique de capacité d'envoi déterminée pour la sélection de la version compatible du signal d'image.

15. Procédé selon l'une quelconque des revendications 11 à 14, dans lequel le réseau de communication est un réseau de communication partagé ayant une caractéristique de bande passante variable dans lé temps, et le procédé comprend en outre l'étape consistant à :
déterminer la caractéristique de bande passante actuelle du réseau de communication connectant l'appareil et le dispositif de réception ; et dans lequel
l'étape d'utilisation comprend l'utilisation de la caractéristique de bande passante déterminée pour sélectionner la version compatible du signal d'image.

16. Procédé selon l'une quelconque des revendications 11 a 14, dans lequel le réseau de communication est un réseau de communication partagé ayant une caractéristique de bande passante variable dans le temps, et le procédé comprend en outre les étapes consistant à :
déterminer la caractéristique de bande passante actuelle du réseau de communication connectant l'appareil et le dispositif de réception ; et
ajuster une caractéristique d'image de la version compatible sélectionnée du signal d'image pour qu'elle corresponde à la caractéristique de bande passante actuelle déterminée.

17. Procédé selon la revendication 16, dans lequel l'étape d'ajustement comprend l'ajustement d'au moins l'une d'une intensité des couleurs ; d'une résolution ; et d'une fréquence de trames de la version compatible sélectionnée du signal d'image.

18. Procédé selon la revendication 16 ou 17, dans lequel l'étape de détermination comprend la réception de mises à jour d'instruction du réseau de communication partagé concernant la bande passante disponible pour une connexion de l'appareil vers le dispositif de réception.

19. Procédé selon l'une quelconque des revendications 11 à 18, dans lequel l'étape d'envoi comprend l'envoi de la version sélectionnée du signal d'image d'un serveur de télécommunication mobile, via un réseau de télécommunication mobile, à un dispositif de télécommunication mobile.

20. Procédé selon l'une quelconque des revendications 11 à 18, dans lequel l'étape d'envoi comprend l'envoi de la version sélectionnée du signal d'image à un dispositif informatique ou un dispositif de télévision.
